# EUROPÄISCHE PATENTSCHRIFT

(11) **EP 2 123 407 B1**
(45) Veröffentlichungstag und Bekanntmachung des Hinweises auf die Patenterteilung: **06.01.2016**
(21) Anmeldenummer: 09006553.3
(22) Anmeldetag: 14.05.2009
(51) Int. Cl.: B25J 9/16

(54) **Verfahren und Vorrichtung zur Steuerung eines Manipulators**
Method and device for controlling a manipulator
Procédé et dispositif de commande d'un manipulateur

(30) Priorität: 23.05.2008 DE 102008024950
(43) Veröffentlichungstag der Anmeldung: 25.11.2009
(73) Patentinhaber: KUKA Roboter GmbH, 86165 Augsburg (DE)
(72) Erfinder: Hasenzahl, Torsten, 89407 Dillingen (DE)
(74) Vertreter: Schlotter, Alexander Carolus Paul

(56) Entgegenhaltungen:
- EP-A1- 1 477 284
- EP-A2- 1 332 841
- EP-A2- 1 801 678
- JP-A- S6 416 395
- US-A1- 2006 009 878
- US-A1- 2007 005 179
- US-B1- 6 429 617

## Beschreibung

Die vorliegende Erfindung betrifft ein Verfahren und eine Vorrichtung zur Steuerung eines Manipulators, insbesondere eines Roboters, wenn ein Fehlerkriterium erfüllt ist.

Manipulatoren, insbesondere Roboter wie beispielsweise Industrie-, Tele- oder Serviceroboter werden im Betrieb auf ein oder mehrere vorgegebene Fehlerkriterien überwacht. So kann beispielsweise in einer Schleppfehlerüberwachung eine Abweichung zwischen einer Soll- und einer Ist-Position des Manipulators derart überwacht werden, dass das Fehlerkriterium erfüllt ist, wenn dieser Schleppabstand - beispielsweise aufgrund einer Kollision des Manipulators mit einem Hindernis - zu groß wird, i.e. der Manipulator die Sollposition aufgrund des Hindernisses nicht anfahren kann. Gleichermaßen können beispielsweise Arbeits- oder Schutzbereiche überwacht werden, wobei das Fehlerkriterium erfüllt ist, wenn der Manipulator den zulässigen Arbeitsbereich verlässt bzw. in den unzulässigen Schutzbereich eintritt.

Ist ein solches Fehlerkriterium erfüllt, wird der Manipulator üblicherweise stillgesetzt, um weiteren Schaden zu verhindern. Dies kann beispielsweise über einen, in der Regel bahnfernen, Stop 0, einen, vorteilhafterweise bahnnahen, Stop 1 oder einen, bevorzugt bahntreuen, Stop 2 gemäß EN 60204 erfolgen. Danach befindet sich der Manipulator jedoch eventuell weiterhin in einer ungünstigen Position, beispielsweise in Kollision mit dem Hindernis, außerhalb des Arbeitsbereiches bzw. innerhalb des Schutzbereiches. Dies kann nachteilig sein, insbesondere, wenn beispielsweise der Manipulator aufgrund seines Gewichts und seiner antriebs- oder bremsenfixierten Position Kräfte auf das Hindernis ausübt oder der Manipulator zur Wiederaufnahme des Arbeitsbetriebes manuell in den Arbeits- bzw. aus dem Schutzbereich gefahren werden muss.

Die EP 1 801 678 A2 schlägt vor, einzelnen Bahnpunkten einer Sollbahn eines Manipulators sogenannte sichere Punkte zuzuordnen und den Manipulator bei einem Notstop ein- oder mehrstufig automatisch auf einen dieser zugeordneten sicheren Punkte zu überführen, die auf einer gegenüber der Sollbahn versetzten, sicheren Bahn liegen. Nachteilig muss hierbei diese sichere Bahn und die Zuordnung der sicheren Punkte zu vorgegebenen Sollbahn-Punkten vorab festgelegt werden.

Die EP 1 801 678 A2 offenbart eine Steuerung für Roboter, wobei der Roboter von einem Hauptpfad zu einer sicheren Position gesteuert wird. Dazu wird vorgeschlagen, in einer Umgebung von dem Hauptpfad des Roboters verschiedene Sicherheitslevel zu definieren, auf denen sich eine Mehrzahl Sicherheitslevelpunkte befinden. Es ergibt sich über die Sicherheitslevel hinweg ein Pfad, welcher schließlich in einem Endpunkt, i.e. der sicheren Position, mündet.

Die EP 1 477 284 A1 betrifft ein Verfahren und eine Steuerung zum Erfassen einer Kollision eines aktuierten Elements. Dazu wird vorgeschlagen, die Kollisionsdetektion auf Basis einer geschätzten Geschwindigkeitsabweichung als Differenz einer aktuellen und einer vorgegebenen Geschwindigkeit auszulegen oder eine geschätzten Beschleunigungsabweichung als Differenz einer aktuellen und einer vorgegebenen Beschleunigung. Als Folge einer Kollision kann die Steuerung dazu angewiesen werden eine Rückwärtsbewegung des bewegten Elementes zu kommandieren.

Die US 6 429 617 D1 betrifft ein Verfahren zum Steuern eines Roboters. Dazu wird vorgeschlagen, einen Pfad eines Roboters zu speichern; eine Kollision dieses Roboters zu erfassen, wobei ein Vergleich aktueller Motorstromwerte mit gespeicherten Referenzwerten durchgeführt wird; und den Roboter nach einer Kollision auf seinem gespeicherten Pfad bis zu einer vorgegebenen Entfernung zurückfahren zu lassen.

Die US 2007/005179 A1 betrifft ein Bewegungsplanungsverfahren für Roboter. Dazu wird vorgeschlagen eine Mehrzahl von räumlichen Positionen, welche durch den Roboter angefahren werden können, als Alternativen bereitzustellen und über vorgegebene Regeln die Bewegungen des Roboters zwischen diesen räumlichen Punkten einzustellen. Die vorgegebenen Regeln können eine Minimierung einer Bewegungszeit oder eine Optimierung eines Pfades darstellen.

Die US 2006/0009878 A1 betrifft eine Vorrichtung zum Programmieren eines Roboters zur Rückkehr in eine Warteposition. Dazu wird vorgeschlagen, eine Robotersteuerung über ein Netzwerk mit einem Programmiergerät zu verbinden. Das Programmiergerät generiert das Rückfahrprogramm basierend auf verschiedenen Informationen, zum Beispiel auf Basis von Karteninformation oder empfangener Information oder zuvor eingegebenen Positionsinformationen.

Aufgabe der vorliegenden Erfindung ist es, eine verbesserte Steuerung eines Manipulators für den Fall zur Verfügung zu stellen, dass ein Fehlerkriterium erfüllt ist.

Diese Aufgabe wird durch ein Verfahren mit den Merkmalen des Anspruchs 1 gelöst. Anspruch 10 stellt eine Vorrichtung, Anspruch 11 bzw. 12 ein Computerprogramm bzw. ein Computerprogrammprodukt zur Durchführung eines Verfahrens nach Anspruch 1 unter Schutz. Die Unteransprüche betreffen vorteilhafte Weiterbildungen.

Erfindungsgemäß wird wenigstens ein Fehlerkriterien überwacht. Ist dieses Fehlerkriterium erfüllt, so wird eine Überschreitungsposition des Manipulators, in der erfasst worden ist, dass das Fehlerkriterium erfüllt ist, erfasst und der Manipulator auf Basis dieser erfassten Überschreitungsposition automatisch in eine Freiposition verfahren. Diese Freiposition wird dabei vorteilhafterweise automatisch erst während des Betriebs des Manipulators, insbesondere während einer Bewegung des Manipulators, auf Basis der Überschreitungsposition generiert.

Hierdurch kann in angepasster Weise auf die Erfüllung des Fehlerkriteriums reagiert und der Manipulator beispielsweise aus einer Stopposition, in der er beim oder nach dem Erfüllen des Fehlerkriteriums automatisch zum Stillstand gekommen ist, in eine geeignete Freiposition verfahren werden. Diese Freiposition bzw. die Bahn, die den Manipulator in diese Position überführt, wird vorteilhafterweise während des Betriebs auf Basis der Überschreitungsposition generiert, in der eine Erfüllung des Fehlerkriteriums festgestellt wurde. Gegenüber dem Anfahren einer vorab festgelegten, gesonderten sicheren Bahn nach der EP 1 801 678 A2 kann damit flexibler auf das Fehlerkriterium reagiert und eine geeignetere Freiposition angefahren werden. Insbesondere, wenn eine tatsächlich vom Manipulator abgefahrene Bahn von der Sollbahn abweicht oder, etwa aufgrund einer Handsteuerung oder einer modellbasierten Momentenregelung, keine Sollbahn-Punkte vorhanden sind, denen sichere Punkte vorab zuordenbar sind, kann dies vorteilhaft sein. Als weiterer Vorteil müssen keine Vorab-Fehlerszenarien simuliert werden, um die Freiposition festzulegen, wenn diese erst während des Betriebs des Manipulators auf Basis der Überschreitungsposition generiert wird.

Als Position wird vorliegend insbesondere eine Pose des Manipulators im kartesischen Raum, i.e. die Lage und/oder Orientierung eines oder mehrerer Glieder des Manipulators bezeichnet, wie sie beispielsweise durch Lage- und Drehwinkel von gliedfesten Referenzsystemen, etwa eines Werkzeugreferenzsystems, des sogenannten "Tool Center Points" (TCP) beschrieben werden können. Gleichermaßen werden als Position auch ein oder mehrere Minimalkoordinaten des Manipulators, insbesondere seine Gelenk- bzw. Achswinkel bezeichnet, wobei die Vorwärtskinematik eine solche Position im Koordinatenraum in eine Pose im kartesischen Raum transformiert, während umgekehrt eine nicht-singuläre Pose im kartesischen Raum durch Lösen der Rückwärtskinematik eindeutig auf eine Position im Koordinatenraum, beispielsweise ein Tupel der Achs- oder Gelenkwinkel des Manipulators abbildbar ist.

Werden Fehlerkriterium und Position des Manipulators kontinuierlich oder quasikontinuierlich überwacht, so kann als Überschreitungsposition vorteilhaft diejenige Position erfasst werden, die der Manipulator zu dem Zeitpunkt aufweist, zu dem das Fehlerkriterium erstmals erfüllt ist. Insbesondere, wenn das Fehlerkriterium und/oder die Position des Manipulators nur zu diskreten, insbesondere weiter auseinanderliegenden Zeitpunkten überwacht, beispielsweise abgetastet werden, kann als Überschreitungsposition jedoch auch beispielsweise eine Position erfasst werden, die der Manipulator aufgewiesen hat, bevor, bevorzugt kurz bevor, oder nachdem, bevorzugt kurz nachdem das Fehlerkriterium erstmals erfüllt ist.

Das Erfassen der Überschreitungsposition umfasst dabei vorteilhafterweise eine flüchtige oder dauerhafte Speicherung der Überschreitungsposition, die insbesondere für eine Fehlerprotokoll zweckmäßig sein kann. Die Überschreitungsposition muss jedoch nicht bzw. nicht vollständig gespeichert werden, sondern kann auch direkt weiterverarbeitet werden, beispielsweise derart, dass auf Basis der erfassten Überschreitungsposition direkt, i.e. ohne Zwischenspeicherung der Überschreitungsposition, die Freiposition bestimmt und abgespeichert wird, um diese anzufahren.

In einer bevorzugten Ausführung wird eine gespeicherte Überschreitungsposition durch die aktuelle Position ersetzt, beispielsweise in einem Speicher überschrieben, solange das Fehlerkriterium nicht erfüllt ist. Je kürzer die Zeitabstände, in denen die gespeicherte Überschreitungsposition durch die jeweils aktuelle Position ersetzt wird, desto näher liegt die erfasste Überschreitungsposition vor der tatsächlichen Position, in der der Manipulator sich befand, als das Fehlerkriterium erstmals erfüllt war.

In einer bevorzugten Ausführung der vorliegenden Erfindung stimmen Überschreitungs- und Freiposition überein. Mit anderen Worten wird der Manipulator im Fehlerfall, i.e. wenn ein Fehlerkriterium erfüllt ist, an diejenige Position zurückpositioniert, zu der dies gerade noch nicht der Fall war (wenn als Überschreitungsposition eine Position erfasst wird, die der Manipulator aufgewiesen hat, bevor das Fehlerkriterium erstmals erfüllt ist) bzw. zu der dies gerade erstmals der Fall war (wenn als Überschreitungsposition eine Position erfasst wird, die der Manipulator aufgewiesen hat, als oder nachdem das Fehlerkriterium erstmals erfüllt ist). Umfasst das Fehlerkriterium beispielsweise das Verlassen eines Arbeitsbereiches oder das Eindringen in einen Schutzbereich, wird der Manipulator also an die Grenze des verlassenen bzw. verletzten Raumes positioniert. Wurde das Fehlerkriterium aufgrund einer Kollision mit einem Hindernis erfüllt, wird der Manipulator entsprechend in die letzte kollisionsfreie Position zurückgefahren. Vorteilhaft kann so der Manipulator seinen Betrieb von der Position aus wieder aufnehmen, in der das Fehlerkriterium noch nicht erfüllt war, also beispielsweise von der letzten korrekten kollisionsfreien Position. Wird als Überschreitungsposition eine Position erfasst, die der Manipulator aufgewiesen hat, als oder nachdem das Fehlerkriterium erstmals erfüllt ist, kann durch entsprechende Anpassung des Fehlerkriteriums, beispielsweise Verkleinerung eines zulässigen Schleppabstandes oder Arbeitsbereiches bzw. Vergrößerung eines unzulässigen Schutzbereiches sichergestellt, werden, dass der Manipulator eine geeignete kollisionsfrei bzw. nicht bereichsverletzende Freiposition anfährt, wenn Überschreitungs- und Freiposition übereinstimmen.

Bevorzugt erfolgt die Rückpositionierung auf einer vorgegebenen Soll-Bahn oder der tatsächlich abgefahrenen Ist-Bahn, die der Manipulator abfuhr, als das Fehlerkriterium erfüllt wurde. Dem liegt die Idee zugrunde, dass die Bahn, auf der der Manipulator gefahren ist bzw. fahren sollte, als das Fehlerkriterium erfüllt wurde, in der Regel eine geeignete Bahn ist, um den Manipulator wieder in eine sichere Freiposition zu überführen.

Verließ beispielsweise der Manipulator in der Überschreitungsposition seinen zulässigen Arbeitsbereich, und ist der Manipulator anschließend auf seiner Ist-Bahn bis in eine Stoppposition gefahren und dort als Reaktion auf das erfüllte Fehlerkriterium zum Stillstand gekommen, so stehen einem Zurückfahren in den Arbeitsbereich auf derselben Bahn wahrscheinlich keine Hindernisse im Wege, mit denen der Manipulator bei der Überführung in die Freiposition kollidieren könnte.
Denn zum einen hat der Manipulator diese wahrscheinlich bereits auf seiner Bahn von der Überschreitungs- in die Stoppposition beseitigt, i.e. als er den Arbeitsbereich verlassen hat. Zum anderen ist es eher unwahrscheinlich, dass beispielsweise ein Mensch oder ein anderes Hindernis in der Zwischenzeit nach Verlassen des Arbeitsbereiches durch den Manipulator in die dabei zurückgelegte Bahn des Manipulators tritt.

Da Manipulatoren häufig Soll-Bahnen präzise nachfahren, die abgespeichert vorliegen und in der Regel in Hinblick auf Antriebsbelastungen, Verfahrzeit, Kollisionsfreiheit oder dergleichen optimiert sind, kann der Manipulator an Stelle der abgefahrenen Ist-Bahn auch auf der Soll-Bahn in die Freiposition zurückfahren, was insbesondere dann vorteilhaft ist, wenn der Manipulator als Reaktion auf das erfüllte Fehlerkriterium einen bahnnahen oder bahntreuen Stopp durchgeführt hat.

Die Freiposition kann gegenüber der Überschreitungsposition auch versetzt sein. Insbesondere, wenn der Manipulator auf seiner abgefahrenen Ist- oder vorgegebenen Sollbahn zurückgefahren wird, kann dies entgegen deren Durchlaufsinn auch über die Überschreitungsposition hinaus erfolgen, i.e. der Manipulator in eine korrekte Position zurückpositioniert werden, zu der das Fehlerkriterium noch nicht erfüllt war, also beispielsweise ein Schutzbereich noch nicht verletzt war oder eine Kollision noch nicht stattgefunden hatte. Durch entsprechenden Versatz zwischen Überschreitungs- und Freiposition kann so ein gewisser Sicherheitsabstand von der Position gehalten werden, in der das Fehlerkriterium erfüllt ist.

An Stelle eines Versatzes entlang der Soll- oder Ist-Bahn kann die Freiposition natürlich auch anderweitig gegenüber der Überschreitungsposition versetzt sein. Beispielsweise kann die Freiposition gegenüber einer Überschreitungsposition, in der der Manipulator einen zulässigen Arbeitsbereich verlassen hat, zum Zentrum des Arbeitsbereiches hin versetzt sein, um den Manipulator möglichst zuverlässig in den Arbeitsbereich zurückzuführen, wenn die Sollbahn des Manipulators beispielsweise entlang der Grenze des Arbeitsbereiches verläuft.

Allgemein kann der Manipulator also auch auf einer Ausweichbahn in die Freiposition verfahren werden, die von seiner abgefahrenen Ist-Bahn oder seiner vorgegebenen Soll-Bahn abweicht und bevorzugt auf Basis der erfassten Überschreitungsposition bestimmt wird.

Eine solche Ausweichbahn kann etwa eine standardgeplante Bahn sein, beispielsweise eine Bahn, die ein Bahnplaner der Robotersteuerung auf Basis von Geschwindigkeitstrapezprofilen zwischen einer Stoppposition und der Freiposition interpoliert. Gleichermaßen kann als Ausweichbahn eine kürzeste und/oder schnellste Bahn zwischen Stopp- und Freiposition bestimmt werden. Verfügt der Manipulator über eine Kollisionsvermeidung, kann bevorzugt eine kollisionsfreie Ausweichbahn zur Freiposition bestimmt werden.

Insbesondere für den Fall einer Kollision kann die Ausweichbahn auch eine kraftoptimierte Bahn zu der Freiposition des Manipulators sein, insbesondere eine Bahn, auf der auf den Manipulator oder einzelne Glieder des Manipulators möglichst geringe äußere Kräfte wirken. Eine solche kraftoptimierte Bahn kann beispielsweise unter Berücksichtigung entsprechender Kraftmesswerte durch Gradientenbildung und Bahnplanung in Richtung des stärksten Gradienten erfolgen, i.e. derart, dass äußere Kräfte sich entlang dieser Bahn am stärksten verringern.

Ist beispielsweise ein Werkzeug des Manipulators mit einem Hindernis kollidiert, und übt dieses Hindernis nach der Kollision auf den Manipulator weiterhin erfassbare äußere Kräfte aus, weil beispielsweise der Manipulator gravitations-, antriebs- und/oder bremsbedingt in der kollidierenden Position weiterhin Kräfte auf das Hindernis ausübt, so führt eine solche kraftoptimierte Ausweichbahn dazu, dass der Manipulator diese Kräfte schnellstmöglich abbaut, i.e. das Hindernis so rasch wie möglich entlastet. Ein anderer Vorteil einer solchen kraftoptimierten Ausweichbahn zeigt sich, wenn der Manipulator schleifend mit einem Hindernis kollidiert und unter Reibung an diesem entlang fährt, bis er zum Stillstand kommt. Würde er hier auf der abgefahrenen Ist-Bahn zurückfahren, würde er dabei erneut am Hindernis entlang schleifen. Eine kraftoptimierte Bahn führt ihn hingegen von dem Reibkontakt fort in eine kollisionsfreie Freiposition.

Die Erfassung äußerer Kräfte kann gleichermaßen direkt, etwa über Kraftsensoren an einem Werkzeug, oder indirekt, beispielsweise mittels Kraftsensoren in den Antrieben des Manipulators oder deren aufgenommener Leistung erfolgen. Vorliegend werden zur Vereinfachung auch gegensinnig parallele Kräftepaare, i.e. Drehomente als Kräfte bezeichnet, so dass beispielsweise Drehmomentsensoren gleichermaßen als Kraftsensoren bezeichnet werden.

Das Fehlerkriterium kann das Überschreiten eines vorgegebenen Höchstwertes durch eine Abweichung zwischen einer Soll- und einer Ist-Position, i.e. einen Schleppfehler umfassen. Kollidiert beispielsweise ein Manipulator mit einem Hindernis, kann er in der Regel seiner Sollbahn nicht mehr ausreichend folgen, so dass eine solche Kollision durch einen entsprechenden Anstieg des Schleppfehlers erfassbar ist. Zusätzlich oder alternativ können entsprechende Schleppfehler auf Geschwindigkeitsebene, Beschleunigungsebene und/oder noch höheren Zeitableitung überwacht werden.

Zusätzlich oder alternativ kann das Fehlerkriterium auch das Überschreiten eines vorgegebenen Höchstwertes durch eine Antriebsenergie und/oder durch eine Antriebskraft umfassen. Insbesondere im Kollisionsfall steigen Antriebsenergie, beispielsweise Motorströme, und Antriebskräfte, insbesondere Getriebemomente, signifikant an, wenn der Manipulator versucht, gegen den Widerstand des Hindernisses seine Sollposition zu erreichen.

Zusätzlich oder alternativ zur Überwachung von Schleppfehlern, Antriebsenergien und/oder -kräften kann das Fehlerkriterium eine Position des Manipulators in einem unzulässigen Bereich und/oder außerhalb eines zulässigen Bereichs umfassen.

So kann, etwa durch Vorgabe bzw. Parametrierung entsprechender Sensor- oder Softwareendschalter, ein zusammenhängender oder aus einzelnen Bereichen bestehender zulässiger Arbeitsbereich, in dem der Manipulaor verfahren darf und der vorteilhaft für Bedienpersonal und dergleichen gesperrt ist, und/oder unzulässiger Schutzbereich vorgegeben werden, in dem sich der Manipulator nicht aufhalten darf, da er beispielsweise für Bedienpersonal zugänglich ist. Ein solcher zulässiger bzw. unzulässigere Bereich kann aufgrund der vorstehend beschriebenen Vorwärts-Rückwärts-Kinematik gleichermaßen im kartesischen Raum, beispielsweise für den TCP, und/oder im Koordinatenraum, beispielsweise Achs- oder Gelenkwinkelraum, fest oder veränderlich vorgegeben werden.

Zusätzlich oder alternativ kann das Fehlerkriterium ein Auslösen einer Erfassungseinrichtung, insbesondere eines Sensors und/oder Schalters umfassen. Ein solcher Sensor kann beispielsweise ein Berührungssensor sein, der eine unvorhergesehene Kollision des Manipulators erfasst. Gleichermaßen kann es sich um einen Notaus-Schalter handeln, der beispielsweise durch eine Bedienperson betätigbar ist. Wird ein solcher Notaus-Schalter betätigt, fährt ein Manipulator aufgrund seiner Trägheit in der Regel noch etwas nach. Durch Rückpositionierung auf die Freiposition, beispielsweise die Position auf der abgefahrenen Bahn, in der der Notaus-Schalter betätig wurde, i.e. die Überschreitungsposition, oder eine demgegenüber auf der abgefahrenen Bahn versetzte, i.e. im Durchlaufsinn vorgelagerte Position, kann der Manipulator seinen Betrieb rasch wieder aufnehmen, ohne zunächst auf die Sollbahn zurückpositioniert werden zu müssen.

Weitere Vorteile und Merkmale ergeben sich aus den Unteransprüchen und den Ausführungsbeispielen. Hierzu zeigt, teilweise schematisiert:
- Fig. 1:: einen Manipulator mit einer Steuervorrichtung nach einer Ausführung der vorliegenden Erfindung; und
- Fig. 2:: den Ablauf eines Verfahrens nach einer Ausführung der vorliegenden Erfindung.

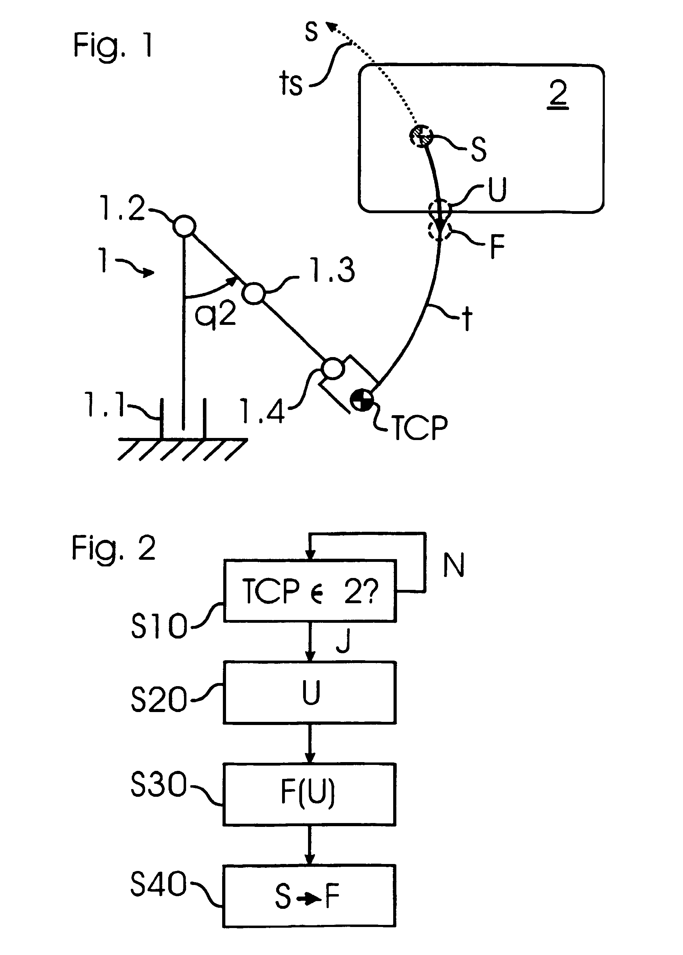

Fig. 1 zeigt einen viergliedrigen Roboter 1, dessen Glieder durch Gelenke 1.1 bis 1.4 miteinander verbunden und gegeneinander über positionsgeregelte Drehmotoren (nicht dargestellt) beweglich sind. Die Winkellagen der einzelnen Gelenke 1.1 bis 1.4 werden durch die Minimalkoordinaten q des Roboters 1 beschrieben, von denen der Drehwinkel q2 um die erste Horizontaldrehachse 1.2 eingezeichnet ist.

Dieser Roboter 1 fährt seine in Fig. 1 strichliert dargestellte Sollbahn ts ab, indem er bei ansonsten unveränderten Gelenkwinkeln den Gelenkwinkel q2 vergrößert. Dabei beschreibt sein TCP die dargestellte Kreisbahn in dem durch s bezeichneten Durchlaufsinn, i.e. mathematisch positiv.

Im Beispiel dringt der Roboter 1 dabei auf seiner ausgezogen dargestellten Ist-Bahn t in der Überschreitungsposition U, die durch die strichlierte Lage des TCP eingezeichnet ist, in einen mit 2 bezeichneten Schutzbereich ein, der beispielsweise erst nach Planung der Sollbahn ts definiert wurde.

Diese Bereichsverletzung wird von einer (nicht dargestellten) Steuervorrichtung des Roboters 1 durch ein entsprechend definiertes Fehlerkriterium "TCP ∈ 2?" erfasst, welches erfüllt ist, wenn der TCP sich innerhalb des Schutzbereiches 2 befindet, was beispielsweise anhand der Gelenkwinkel q im Koordinatenraum oder der Position des TCP im kartesischen Raum bestimmbar ist.

Sobald dieses Fehlerkriterium erfüllt ist (Schritt S10: "J"), wird in einem Schritt S20 die Überschreitungsposition U, in der die Schutzbereichsverletzung begonnen hat, erfasst und abgespeichert. Anschließend wird in einem Schritt S30 auf Basis dieser Überschreitungsposition U eine Freiposition F bestimmt.

Diese Freiposition F, die in Fig. 1 durch die Position des TCP strichliert eingezeichnet ist, liegt auf der Sollbahn ts und ist gegenüber der Überschreitungsposition U entgegen dem Soll-Durchlaufsinn s um einen vorgegebenen Abstand zurückversetzt.

Nun wird in einem Schritt S40 der Roboter 1, der aufgrund der erkannten Verletzung des Schutzbereichs 2 in einem Stopp 2 bahntreu in einer Stoppposition S auf der Sollbahn ts stillgesetzt wurde, entgegen des Soll-Durchlaufsinnes s auf der abgefahrenen Bahn t, die im Wesentlichen der Sollbahn ts entspricht, von der Stoppposition S in die Freiposition F zurückpositioniert.

Da davon ausgegangen werden kann, dass der Roboter 1 bereits beim fehlerhaften Eindringen in den Schutzbereich 2 etwaige Hindernisse entlang der angefahrenen Bahn t beseitigt hat und nach Erreichen der Stopposition dort keine neuen Hindernisse aufgetreten sind, weil beispielsweise Personen, die sich im Schutzraum aufhalten, im Allgemeinen nicht in die abgefahrene Roboterbahn t treten, erfolgt dieses Rückpositionieren kollisionsfrei. Anschließend ist der Roboter 1 vorteilhaft bereits auf seiner Sollbahn ts positioniert und kann, sobald der Schutzraum 2 entfernt wird, seinen Betrieb rasch wieder aufnehmen und die Bahn fortsetzen.

Eine analoge Situation ergibt sich, wenn mit 2 kein Schutzbereich, sondern ein Hindernis bezeichnet ist, mit dem der Roboter 1 in der Überschreitungsposition kollidiert, so dass sein TCP in das Hindernis 2 eindringt. Dies kann beispielsweise durch ein Ansteigen des Motorstromes bzw. -drehomentes insbesondere des Antriebsmotors für das Drehgelenk 1.2 und/oder eine Vergrößerung des Schleppabstandes insbesondere im Gelenk- bzw. Achswinkel q2 erfasst werden.

Fährt der Roboter 1, nachdem er in S zum Stillstand gekommen ist, auf dem gleichen Wege in die vorstehend erläutere Freiposition F zurück, schädigt er das Hindernis 2 nicht weiter.

### Bezugszeichenliste

- 1: Roboter
- 1.1 - 1.4: Gelenk
- 2: Schutzbereich; Hindernis
- q2: Gelenkwinkel
- s: Durchlaufsinn
- t: abgefahrene Bahn
- ts: Sollbahn
- F: Freiposition
- S: Stoppposition
- TCP: Tool Center Point
- U: Überschreitungsposition

## Patentansprüche

1. Verfahren zur Steuerung eines Manipulators, insbesondere eines Roboters (1), mit den Schritten:
- Überwachen eines Fehlerkriteriums (S10);
- Erfassen einer Überschreitungsposition (U), wenn das Fehlerkriterium erfüllt ist (S20); und
- Generieren einer Freiposition (F) auf Basis der erfassten Überschreitungsposition (S30) erst während des Betriebs des Manipulators; und
- automatisches Verfahren des Manipulators in die Freiposition (F) auf einer Ausweichbahn, die von seiner abgefahrenen Ist-Bahn oder seiner vorgegebenen Soll-Bahn abweicht, wenn das Fehlerkriterium erfüllt ist (S40) wobei die Ausweichbahn eine standardgeplante Bahn, eine kürzeste und/oder schnellste Bahn, eine kollisionsfreie Bahn oder eine kraftoptimierte Bahn zu der Freiposition des Manipulators ist.

2. Verfahren nach Anspruch 1, **dadurch gekennzeichnet, dass** Überschreitungs- und Freiposition im Wesentlichen übereinstimmen.

3. Verfahren nach Anspruch 1, **dadurch gekennzeichnet, dass** die Freiposition (F) gegenüber der Überschreitungsposition (U) versetzt ist.

4. Verfahren nach einem der vorhergehenden Ansprüche, **dadurch gekennzeichnet, dass** das Fehlerkriterium ein Überschreiten eines vorgegebenen Höchstwertes durch eine Abweichung zwischen einer Soll- und einer Ist-Position (q), durch eine Abweichung zwischen einer Zeitableitung (dⁿq/dtⁿ) einer Soll- und einer Ist-Position (q), durch eine Antriebsenergie und/oder durch eine Antriebskraft umfasst.

5. Verfahren nach einem der vorhergehenden Ansprüche, **dadurch gekennzeichnet, dass** das Fehlerkriterium eine Position des Manipulators innerhalb eines unzulässigen Bereich (2) und/oder außerhalb eines zulässigen Bereichs umfasst.

6. Verfahren nach einem der vorhergehenden Ansprüche, **dadurch gekennzeichnet, dass** das Fehlerkriterium ein Auslösen einer Erfassungseinrichtung, insbesondere eines Sensors und/oder Schalters umfasst.

7. Vorrichtung zur Steuerung eines Manipulators, insbesondere eines Roboters (1), mit:
einer Überwachungseinrichtung zum Überwachen eines Fehlerkriteriums;
einer Erfassungseinrichtung zum Erfassen einer Überschreitungsposition (U); und
einer Steuereinrichtung zur Durchführung eines Verfahrens nach einem der vorhergehenden Ansprüche.

8. Computerprogramm, dass ein Verfahren nach einem der Ansprüche 1 bis 6 ausführt, wenn es in einer Vorrichtung nach Anspruch 7 abläuft.

9. Computerprogrammprodukt mit Programmcode, der auf einem maschinenlesbaren Träger erfasst ist und ein Computerprogramm nach Anspruch 8 umfasst.

## Claims

1. A method for controlling a manipulator, in particular a robot (1), comprising the steps:
- monitoring an error criterion (S10);
- detecting an overrun position (U) when the error criterion is satisfied (S20); and
- generating a free position (F) based on the detected overrun position (S30) first during the operation of the manipulator; and
- automatically moving the manipulator into the free position (F) along a side path that deviates from the travelled actual path or its predetermined desired path if the error criterion is satisfied (S40), wherein the side path is a standard planned path, a shortest and/or fastest path, a collision-free path or a force optimized path to the free position of the manipulator.

2. A method according to claim 1, **characterized in that** the overrun position and the free position are substantially coincident.

3. A method according to claim 1, **characterized in that** the free position (F) is offset from the overrun position (U).

4. A method according to one of the preceding claims, **characterized in that** the error criterion comprises an exceeding of a predefined maximum value by a deviation between a desired and an actual position (q), by a deviation between a time derivative (dⁿq/dtⁿ) of a desired and an actual position (q), by a driving energy and/or by a driving force.

5. A method according to one of the preceding claims, **characterized in that** the error criterion comprises a position of the manipulator within an impermissible region (2) and/or outside a permissible region.

6. A method according to one of the preceding claims, **characterized in that** the error criterion comprises a triggering of a detection device, in particular a sensor and/or switch.

7. An apparatus for controlling a manipulator, in particular a robot (1), comprising:
a monitoring device for monitoring an error criterion;
a detection device for detecting an overrun position (U); and
a control device for carrying out a method according to one of the preceding claims.

8. A computer program that carries out a method according to one of the claims 1 to 6, when it is running in an apparatus according to claim 7.

9. A computer program product comprising program code that is recorded on a machine-readable medium and that comprises a computer program according to claim 8.

## Revendications

1. Procédé de commande d'un manipulateur, en particulier d'un robot (1), comprenant les étapes consistant à :
- surveiller un critère de défaillance (S10) ;
- détecter une position de dépassement (U) lorsque le critère de défaillance est rempli (S20) ; et
- générer une position libre (F) sur la base de la position de dépassement (S30) détectée uniquement pendant le fonctionnement du manipulateur ; et
- déplacer automatiquement le manipulateur dans la position libre (F) sur une trajectoire d'écartement, qui s'écarte de sa trajectoire réelle parcourue ou de sa trajectoire théorique prédéfinie, lorsque le critère de défaillance est rempli (S40), la trajectoire d'écartement étant une trajectoire planifiée de manière standard, la trajectoire la plus courte et/ou la plus rapide, une trajectoire exempte de collision ou une trajectoire à puissance optimisée par rapport à la position libre du manipulateur.

2. Procédé selon la revendication 1, **caractérisé en ce que** la position de dépassement et la position libre coïncident sensiblement.

3. Procédé selon la revendication 1, **caractérisé en ce que** la position libre (F) est décalée de la position de dépassement (U).

4. Procédé selon l'une quelconque des revendications précédentes, **caractérisé en ce que** le critère de défaillance comprend un dépassement d'une valeur maximale prédéfinie du fait d'une divergence entre une position théorique et une position réelle (q), du fait d'une divergence entre une dérivée temporelle (dⁿq/dtⁿ) d'une position théorique et d'une position réelle (q), du fait d'une énergie d'entraînement et/ou du fait d'une force d'entraînement.

5. Procédé selon l'une quelconque des revendications précédentes, **caractérisé en ce que** le critère de défaillance comprend une position du manipulateur à l'intérieur d'une plage inadmissible (2) et/ou à l'extérieur d'une plage admissible.

6. Procédé selon l'une quelconque des revendications précédentes, **caractérisé en ce que** le critère de défaillance comprend un déclenchement d'un dispositif de détection, en particulier d'un capteur et/ou d'un commutateur.

7. Dispositif de commande d'un manipulateur, en particulier d'un robot (1), comprenant :
un système de surveillance destiné à surveiller un critère de défaillance ;
un système de détection destiné à détecter une position de dépassement (U) ; et
un système de commande destiné à mettre en oeuvre un procédé selon l'une quelconque des revendications précédentes.

8. Programme informatique qu'un procédé selon l'une quelconque des revendications 1 à 6 exécute lorsqu'il se déroule dans un dispositif selon la revendication 7.

9. Produit programme informatique comprenant un code de programme qui est détecté sur un support lisible par une machine et qui comprend un programme informatique selon la revendication 8.
